(19) Europäisches Patentamt
European Patent Office
Office européen des brevets

(11) **EP 2 513 677 B1**

(12) **EUROPÄISCHE PATENTSCHRIFT**

(45) Veröffentlichungstag und Bekanntmachung des Hinweises auf die Patenterteilung:
**07.07.2021   Patentblatt 2021/27**

(21) Anmeldenummer: **10771095.6**

(22) Anmeldetag: **26.10.2010**

(51) Int Cl.:
***G01V 3/15*** *(2006.01)*

(86) Internationale Anmeldenummer:
**PCT/EP2010/066101**

(87) Internationale Veröffentlichungsnummer:
**WO 2011/072929 (23.06.2011 Gazette 2011/25)**

(54) **HANDMESSGERÄT**

HANDHELD MEASURING DEVICE

APPAREIL DE MESURE PORTATIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2009   DE 102009054950**

(43) Veröffentlichungstag der Anmeldung:
**24.10.2012   Patentblatt 2012/43**

(73) Patentinhaber: **Robert Bosch GmbH**
**70442 Stuttgart (DE)**

(72) Erfinder:
• **KRAPF, Reiner**
**70794 Filderstadt (DE)**
• **BRAUN, Heiko**
**70771 Leinfelden-Echterdingen (DE)**
• **MAHLER, Michael**
**70771 Leinfelden-Echterdingen (DE)**
• **WUERSCH, Christoph**
**CH-9470 Werdenberg (CH)**
• **KANEIDER, Wilfried**
**A-6830 Rankweil-Brederis (AT)**

(56) Entgegenhaltungen:
**EP-A1- 2 350 701          EP-A2- 1 760 493**
**WO-A1-03/073131          WO-A1-2005/111663**
**WO-A2-2006/044947      DE-A1-102006 025 881**

EP 2 513 677 B1

**Beschreibung**

Stand der Technik

Die Erfindung geht aus von einem Handmessgerät nach dem Oberbegriff des Anspruchs 1.

Es ist bereits ein Handmessgerät mit einem Ortungssensor, der dazu vorgesehen ist, einen Gegenstand in einem Messobjekt zu orten, und mit einer Schutzschaltung, die einen Objektsensor aufweist, der dazu vorgesehen ist, eine Objektkenngröße zu erfassen, die von einer Ausrichtung des Ortungssensors auf das Messobjekt abhängig ist, vorgeschlagen worden, beispielsweise in WO 2006/044947 A2 oder in EP 2 350 701 A1. Mittels des Objektsensors der Schutzschaltung wird ein Anliegen des Handmessgeräts an einem Messobjekt erfasst.

Die WO2005/11663 A1 offenbart ein Ortungsgerät, insbesondere ein handgehaltenes Ortungsgerät, zur Detektion von in einem Medium eingeschlossenen Objekten, mit ersten Mitteln zur Detektion von in einem Medium eingeschlossenen Objekten, sowie mit einer Steuer- und Auswerteeinheit für Messsignale des Ortungsgerätes. Das Gerät der WO2005/11663 A1 verfügt über zweite Detektionsmittel die es ermöglichen, einen vorgebbaren Abstand d des Ortungsgerätes zu einer Oberfläche eines Mediums zu detektieren.

Des Weiteren betrifft die WO2005/11663 A1 ein Verfahren zur Kalibrierung eines Messgerätes, insbesondere zur Kalibrierung eines handgehaltenen Ortungsgerätes zur Detektion von in einem Medium eingeschlossenen Objekten, bei dem eine Referenzmessung zur Kalibrierung des Messgerätes erst nach der Durchführung mindestens einer Messung eines Abstandes d des Messgerätes zu einer Oberfläche eines Mediums durchgeführt wird. Dabei offenbart die WO2005/11663 A1 in der amtsseitig entgegengehaltenen Passage, dass neben einem automatischen Kalibrierungsverfahren, in dem Messgerät der WO2005/11663 A1 auch vorgesehen sein kann, einen solchen Kalibrierungsmodus nutzergesteuert, beispielsweise durch eine Taste eines Bedienfelds zu aktivieren.

Offenbarung der Erfindung

Die Erfindung geht aus von einem Handmessgerät gemäß Anspruch 1.

Unter einem "Handmessgerät" soll insbesondere ein Gerät verstanden werden, das dazu vorgesehen ist, von einem Bediener gehalten und/oder geführt zumindest eine Messung durchzuführen.

Vorteilhaft zeigt das Handmessgerät ein Messergebnis auf einem mitbewegten Display an. Insbesondere soll unter dem Begriff "Ortungssensor" ein kapazitiver Sensor, ein induktiver Sensor, ein Radarsensor, ein Röntgensensor, ein anderer, dem Fachmann als sinnvoll erscheinender Sensor und/oder vorteilhaft ein UWB-Sensor verstanden werden. Unter einem "UWB-Sensor" soll insbesondere ein Sensor verstanden werden, der bei einer Messung zumindest ein breitbandiges Funksignal aussendet und eine Reflexion des Funksignals empfängt. Die Abkürzung "UWB" steht dabei für "Ultra Wide Band". Unter einem "breitbandigen Funksignal" soll insbesondere ein Funksignal mit einer 3 dB Bandbreite von mehr als 0,3 GHz, vorteilhaft mehr als 1 GHz, verstanden werden. Vorzugsweise weist das Funksignal eine, dem Fachmann als sinnvoll erscheinende Mittenfrequenz zwischen 180 MHz und 10,5 GHz, besonders bevorzugt zwischen 600 MHz und 3 GHz, auf. Vorteilhaft beträgt eine Sendeleistung des Ortungssensors weniger als 0,5 mW und/oder weniger als -41,3 dBm/MHz, besonders vorteilhaft weniger als -63 dBm/MHz. Insbesondere soll unter der Wendung "einen Gegenstand in einem Messobjekt orten" verstanden werden, dass der Ortungssensor bei einem Betrieb einen in dem Messobjekt verdeckt angeordneten Gegenstand erfassen kann. Vorteilhaft erfasst der Ortungssensor bei einem Betrieb einen Abstand zwischen einem verdeckt angeordneten Gegenstand und dem Ortungssensor, insbesondere wenn der Gegenstand in einem Ortungsbereich des Ortungssensors angeordnet ist. Vorzugsweise ist der Ortungssensor dazu vorgesehen, einen Gegenstand in einer Wand, einer Decke und/oder in einem Boden zu orten. Ein Gegenstand könnte beispielsweise eine Armierung, ein Kunststoffrohr, ein Elektrokabel und/oder andere, insbesondere die Wand bildende Objekte wie Beton, Ziegel, Mauerwerk usw. sein. Unter einer "Schutzschaltung" soll insbesondere eine Schaltung verstanden werden, die in zumindest einem Betriebszustand ein Senden eines Funksignals verhindert, und zwar insbesondere um dritte Geräte, beispielsweise GPS, W-LAN, UMTS, Flugfunk und/oder Radioastronomie vor Störungen durch das Funksignal zu schützen. Insbesondere soll unter einem "Objektsensor" ein UWB-Sensor, ein Impedanzmesssensor, ein optischer Sensor, ein Kennzeichnungssensor, ein induktiver Sensor, ein Schallsensor, ein taktiler Sensor, ein anderer, dem Fachmann als sinnvoll erscheinender Sensor und/oder vorteilhaft ein kapazitiver Sensor verstanden werden. Ein "UWB-Sensor" misst vorteilhaft einen Abstand zwischen einer Oberfläche eines Messobjekts und dem Objektsensor durch ein von der Oberfläche des Messobjekts reflektiertes breitbandiges Funksignal. Ein "Impedanzmesssensor" misst vorzugsweise einen Wellenwiderstand einer Antenne, eine Fehlanpassung der Antenne, eine Sprung- und/oder Impulsantwort der Antenne und/oder eine andere, dem Fachmann als sinnvoll erscheine Kenngröße der Antenne. Vorteilhaft misst der Impedanzmesssensor die Impedanz einer Antenne des Ortungssensors. Unter einem "optischen Sensor" soll insbesondere eine Reflexlichtschranke, ein Photorefraktor und/oder ein anderer, dem Fachmann als sinnvoll erscheinender optischer Sensor verstanden werden. Unter einem "Kennzeichnungssensor" soll insbesondere ein Sensor verstanden werden, der eine an oder auf das Messobjekt aufgebrachte Markierung, wie beispielsweise einen Barcode oder einen RFID-Chip, in zumindest einem Betriebszustand erfasst. Unter einem "Schallsensor" soll insbesondere ein Ultraschall oder ein anderer, dem Fachmann als sinnvoll erscheinender Sensor verstanden werden. Unter einem "kapazitiven Sensor" soll insbesondere ein Sensor verstanden werden, der eine Kapazität misst, die zumindest von einer Ausrichtung des Ortungssensors auf das Messobjekt und insbesondere von einer Entfernung des Ortungssensors zu dem Messobjekt abhängig ist. Unter "vorgesehen" soll insbesondere speziell ausgestattet, ausgelegt und/oder programmiert verstanden werden. Unter einer "Objektkenngröße" soll insbesondere eine Kenngröße verstanden werden, die analog und/oder digital codiert eine Information über die Ausrichtung des Ortungssensors relativ zu dem Messobjekt bereitstellt und/oder transportiert. Gemäß der Erfindung wird aus der Information zumindest darauf geschlossen, ob der Ortungssensor auf das Messobjekt ausgerichtet ist. Unter einem "Bedienersensor" soll insbesondere ein taktiler Sensor, ein resistiver Sensor, ein Bewegungssensor, ein Beschleunigungssensor, ein RFID-Sensor, ein Infrarotsensor, ein anderer, dem Fachmann als sinnvoll erscheinender Sensor und/oder vorteilhaft ein kapazitiver Sensor verstanden werden. Ein "taktiler Sensor" könnte beispielsweise als ein von einem Bediener betätigbarer Schalter ausgebildet sein, der an einem Handgriff und/oder zumindest einer Achse von wenigstens einem Rad angeordnet ist. Ein "Bewegungssensor" könnte beispielsweise eine Bewegung des Handmessgeräts gegenüber dem Messobjekt durch an Achsen der Aufhängung angeordnete Inkrementalgeber erfassen. Ein "RFID-Sensor" könnte beispielsweise eine Anwesenheit eines von einem Bediener mitgeführten RFID-Chips erfassen. Dieser könnte gleichzeitig dem Diebstahlschutz dienen. Insbesondere soll unter einer "Bedienerkenngröße" eine Kenngröße verstanden werden, die analog und/oder digital codiert eine Information über eine Interaktion des Bedieners mit dem Handmessgerät bereitstellt und/oder transportiert. Die Erfindung beschreibt die Bedienerkenngröße, ob der Bediener das Handwerkzeug greift, beschleunigt, an ein Messobjekt ansetzt und/oder bewegt. Durch die erfindungsgemäße Ausgestaltung des Handmessgeräts kann mit besonders wenigen Bauteilen und einem geringen konstruktiven Aufwand eine besonders vorteilhafte und zuverlässige Erkennung eines messbereiten Betriebszustands erreicht werden. Dadurch kann insbesondere der Ortungssensor in anderen Betriebszuständen ausgeschaltet werden, was elektromagnetische Störungen vermeidet.

Gemäß der Erfindung weist die Schutzschaltung zumindest eine Auswerteeinheit auf, die in zumindest einem Betriebszustand eine zumindest von der Objektkenngröße und der Bedienerkenngröße abhängige Steuerkenngröße ausgibt. Unter einer "Auswerteeinheit" soll insbesondere eine Einheit verstanden werden, die einen Eingang für die Objektkenngröße, einen Eingang für die Bedienerkenngröße und einen Ausgang für eine Steuerkenngröße aufweist. Alternativ könnte die Auswerteeinheit auch einen einzigen Eingang für die Objektkenngröße und die Bedienerkenngröße aufweisen. Alternativ oder zusätzlich könnte die Auswerteeinheit die Bedienerkenngröße und die Objektkenngröße insbesondere logisch miteinander verknüpfen. Unter einer "Steuerkenngröße" soll insbesondere eine Kenngröße verstanden werden, die dazu vorgesehen ist, insbesondere eine Leistung eines Funksignals des Ortungssensors zu beeinflussen, und insbesondere ein Funksignal abzuschalten. Durch die Auswerteeinheit kann konstruktiv einfach eine besonders zuverlässige Erfassung eines messbereiten Betriebszustandes erreicht werden.

Des Weiteren wird vorgeschlagen, dass der Objektsensor dazu vorgesehen ist, die Objektkenngröße von einem Abstand des Ortungssensors zu dem Messobjekt abhängig zu ermitteln, wodurch besonders zuverlässig erkannt werden kann, wenn das Messgerät in einer messbereiten Position relativ zu dem Messobjekt angeordnet ist. Unter der Wendung "von einem Abstand abhängig" soll insbesondere verstanden werden, dass die Objektkenngröße zumindest eine Information, die den Abstand beschreibt, aufweist. Vorteilhaft ist aus der Information ermittelbar, ob Räder des Handmessgeräts an dem Messobjekt anliegen.

Gemäß der Erfindung sendet der Ortungssensor in zumindest einem Betriebszustand ein breitbandiges Funksignal aus, wodurch konstruktiv einfach eine besonders vorteilhafte und genaue Ortung erreicht werden kann.

Gemäß der Erfindung beeinflusst die Schutzschaltung in zumindest einem Betriebszustand eine Aussendung des breitbandigen Funksignals, wodurch vorteilhaft das Funksignal in Betriebszuständen, in denen nicht gemessen werden soll, reduziert und/oder vorteilhaft abgeschaltet werden kann. Insbesondere soll unter der Wendung "eine Aussendung beeinflussen" verstanden werden, dass die Schutzschaltung des breitbandigen Funksignals insbesondere eine Sendeleistung des Funksignals, verändert und/oder vorteilhaft ein und/oder ausschaltet. Alternativ könnte eine Aussendung nur in störenden Frequenzbereichen unterdrückt werden.

Weiterhin wird vorgeschlagen, dass der Ortungssensor und der Objektsensor zumindest teilweise einstückig ausgebildet sind, wodurch besonders vorteilhaft Bauteile und konstruktiver Aufwand eingespart werden können. Unter der Wendung "zumindest teilweise einstückig ausgebildet" soll insbesondere verstanden werden, dass der Ortungssensor und der Objektsensor wenigstens eine gemeinsame Funktionsgruppe aufweisen, die vorteilhaft eine Messgröße in eine insbesondere elektrische Kenngröße umsetzt. Vorzugsweise weisen der Ortungssensor und der Objektsensor einen gemeinsamen Messaufnehmer auf. Vorteilhaft erfassen der Objektsensor und der Ortungssensor zumindest eine Kenngröße nach einem gleichen Funktionsprinzip, beispielsweise per UWB-Signal, alternativ nach einem unterschiedlichen Funktionsprinzip, beispielsweise per UWB-Signal und kapazitivem Signal.

In einer vorteilhaften Ausbildung der Erfindung wird vorgeschlagen, dass der Objektsensor und/oder der Bedienersensor dazu vorgesehen sind, kapazitiv zu messen, wodurch eine besonders zuverlässige und robuste Messung konstruktiv einfach möglich ist. Unter der Wendung "kapazitiv messen" soll insbesondere verstanden werden, dass der Objektsensor und/oder der Bedienersensor zumindest eine Kapazität messen. Vorzugsweise misst der Objektsensor zumindest eine Kapazität zwischen einem Messaufnehmer des Objektsensors und dem Messobjekt. Vorteilhaft misst der Bedienersensor eine Kapazität zwischen einem Messaufnehmer des Bedienersensors und dem Bediener.

Des Weiteren wird vorgeschlagen, dass der Objektsensor und der Bedienersensor ein zumindest teilweise einstückig ausgebildetes Messmittel aufweisen, wodurch vorteilhaft Bauteile und Bauraum eingespart werden können. Unter einem "Messmittel" soll insbesondere ein Mittel verstanden werden, das eine insbesondere von einem Messaufnehmer kommende Energie in eine Kenngröße umwandelt, das heißt insbesondere interpretiert und/oder linearisiert. Vorzugsweise geben ein oder zwei Messmittel die Objektkenngröße und/oder die Bedienerkenngröße aus.

Ferner wird vorgeschlagen, dass der Objektsensor und der Bedienersensor zumindest teilweise in Reihe geschaltet sind, wodurch eine besonders Bauteil sparende und konstruktiv einfache Verknüpfung der Kenngrößen der Sensoren möglich ist. Vorzugsweise sind die Messaufnehmer des Objektsensors und des Bedienersensors, vorteilhaft über das Messobjekt und den Bediener, in Reihe geschaltet. Unter der Wendung "in Reihe geschaltet" soll insbesondere verstanden werden, dass die zum Messen verwendetet Energie die Messaufnehmer nacheinander durchläuft. Unter einem "Messaufnehmer" soll insbesondere ein Mittel verstanden werden, das eine zum Messen verwendetet Energie aussendet und oder vorteilhaft empfängt, und insbesondere dabei wandelt.

Zudem wird vorgeschlagen, dass der Bedienersensor dazu vorgesehen ist, zumindest eine Beschleunigung zu erfassen, wodurch besonders vorteilhaft eine Interaktion des Bedieners mit dem Handmessgerät erkannt werden kann. Unter einer "Beschleunigung" soll insbesondere eine Beschleunigung des Messmittels des Bedienersensors relativ zu dem Messobjekt verstanden werden. Alternativ oder zusätzlich bestimmt der Bedienersensor, insbesondere durch Integrieren, eine Geschwindigkeit des Messmittels des Bedienersensors relativ zu dem Messobjekt.

Zudem wird vorgeschlagen, dass der Bedienersensor dazu vorgesehen ist, zumindest eine Drehgeschwindigkeit ("Gyro") zu erfassen, wodurch besonders vorteilhaft eine Interaktion des Bedieners mit dem Handmessgerät erkannt werden kann. Auf diese Weise kann insbesondere das Abheben des Detektors von - beispielsweise - einer Wand erkannt werden.

Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1 ein erfindungsgemäßes Handmessgerät mit einem Ortungssensor und einer Schutzschaltung, die einen Objektsensor und einen Bedienersensor aufweist,

Fig. 2 ein schematischer Aufbau der Schutzschaltung des Handmessgeräts aus Figur 1,

Fig. 3 eine schematische Funktionsskizze der Schutzschaltung des Handmessgeräts aus Figur 1 und

Fig. 4 eine Funktionsweise einer Auswertung des Handmessgeräts aus Figur 1.

Beschreibung des Ausführungsbeispiels

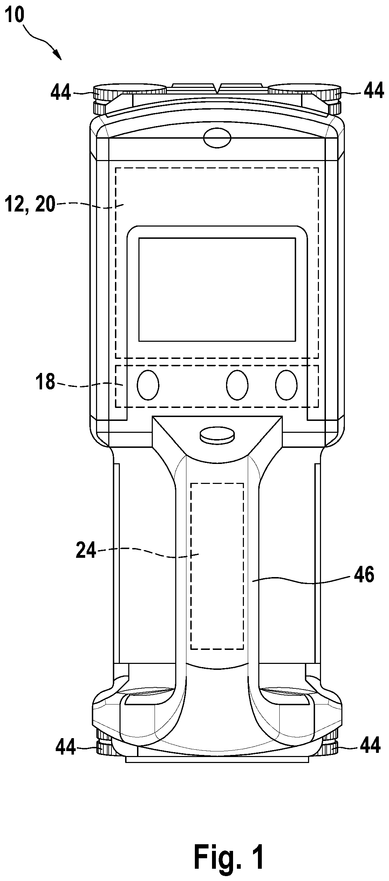

Figur 1 zeigt ein erfindungsgemäßes Handmessgerät 10 mit einem Ortungssensor 12. Der Ortungssensor 12 ortet bei einem Messbetrieb Gegenstände 14, die in einem Messobjekt 16 angeordnet sind. Das Messobjekt 16 ist als eine Wand ausgebildet. Dabei können die Gegenstände 14 unter einer Oberfläche des Messobjekts 16 verdeckt angeordnet sein. Zur Ortung weist der Ortungssensor 12 einen Messaufnehmer 40 und eine Ortungselektronik 42 auf. Der Ortungssensor 12 sendet bei einem Messbetrieb ein breitbandiges Funksignal 36 aus. Eine Bandbreite des Funksignals 36 beträgt 1 bis 3 GHz. Der Messaufnehmer 40 weist mehrere nicht einzeln dargestellte Antennen auf. Die Ortungselektronik 42 und der Messaufnehmer 40 bilden zusammen ein SAR-Ortungssystem (Synthetic Aperture Radar). Das Funksignal 36 wird von den Gegenständen 14 reflektiert. Laufzeiten und Stärke der Reflexionen werden von dem Ortungssensor 12 vermessen. Eine Tiefenauflösung des breitbandigen Funksignals 36 lässt sich dabei nach folgender Formel berechnen:

$$\Delta z = \frac{c_0}{2\sqrt{\varepsilon_r}B}$$

$\Delta z$: Tiefenauflösung in [m]
$c_0$: Lichtgeschwindigkeit in [m/s]
$\varepsilon_r$: Permittivität des Messobjekts

B: Bandbreite des Funksignals

Während eines Messbetriebs bewegt ein Bediener 28 das Handmessgerät 10 entlang einer Oberfläche des Messobjekts 16. Dazu weist das Handmessgerät 10 ein Fahrwerk mit mehreren Rädern 44 auf. Das Fahrwerk weist nicht näher dargestellte Achsen auf, die die Räder 44 drehbar befestigen. Die Achsen sind mit nicht näher dargestellten Bewegungssensoren verbunden, die eine Bewegung des Handmessgeräts 10 relativ zu dem Messobjekt 16 erfassen. Dadurch kann eine nicht näher dargestellte Recheneinheit des Handmessgeräts 10 einen zweidimensionalen Schnitt des Messobjekts 16 berechnen. Die Recheneinheit ist als ein Microcontroller ausgebildet.

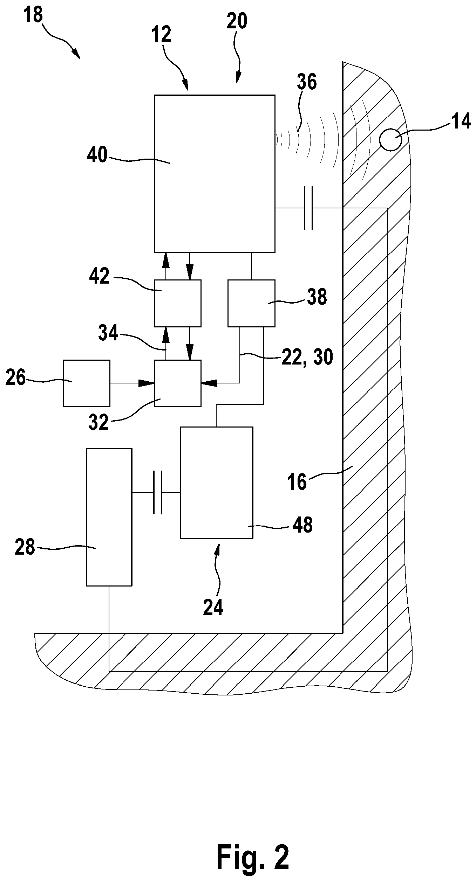

Figur 2 zeigt, dass das Handmessgerät 10 eine Schutzschaltung 18 mit einem Objektsensor 20 aufweist. Der Objektsensor 20 erfasst während eines Betriebs eine Objektkenngröße 22. Die Objektkenngröße 22 ist von einer Ausrichtung des Ortungssensors 12 auf das Messobjekt 16 abhängig, das heißt die Objektkenngröße 22 weist zumindest eine Information auf, die beschreibt, ob der Ortungssensor 12 auf das Messobjekt 16 ausgerichtet ist. Dazu weist der Objektsensor 20 ein Messmittel 38 und einen Messaufnehmer 40 auf. Der Messaufnehmer 40 des Ortungssensors 12 ist einstückig mit dem Messaufnehmer 40 des Objektsensors 20 ausgebildet. Somit sind der Ortungssensor 12 und der Objektsensor 20 teilweise einstückig ausgebildet. Alternativ könnte ein Messaufnehmer des Ortungssensors 12 von dem Messaufnehmer 40 des Objektsensors 20 getrennt ausgebildet sein und beispielsweise über die Räder 44 oder über einen Schleifkontakt insbesondere kapazitiv mit dem Messobjekt 16 verbunden sein.

Der Objektsensor 20 ist als ein kapazitiver Sensor ausgebildet, das heißt das Messmittel 38 ist dazu vorgesehen, eine Kapazität zwischen zwei Eingängen zu messen. Somit misst der Objektsensor 20 die Objektkenngröße 22 kapazitiv. Das Messmittel 38 ist über den Messaufnehmer 40 kapazitiv mit dem Messobjekt 16 gekoppelt. Dadurch kann der Objektsensor 20 die Objektkenngröße 22 von einem Abstand des Ortungssensors 12 zu dem Messobjekt 16 abhängig ermitteln. Alternativ oder zusätzlich könnte ein Objektsensor als ein mit den Rädern 44 verbundener Bewegungssensor oder als Sensor, der während eines Betriebs einen Druck der Räder 44 gegen die Oberfläche erfassten, ausgebildet sein.

Ferner weist die Schutzschaltung 18 einen ersten Bediensensor 24 und einen zweiten Bedienersensor 26 auf. Die Bedienersensoren 24, 26 erfassen während eines Messbetriebs eine von dem Bediener 28 abhängige Bedienerkenngröße 30. Die Bedienerkenngröße 30 weist Informationen auf, die eine Interaktion des Bedieners 28 beschreiben, aus der eine Messabsicht erkenntlich ist, das heißt ob der Bediener 28 messen will. Beispielsweise könnte die Bedienerkenngröße 30 beschreiben, ob das Handmessgerät 10 beschleunigt wird, ob sich der Bediener 28 in der Nähe des Handmessgeräts 10 aufhält und/oder ob der Bediener 28 einen Handgriff 46 des Handmessgeräts 10 greift.

In diesem Ausführungsbeispiel weist der erste Bedienersensor 24 ein Messmittel 38 und einen Messaufnehmer 48 auf. Das Messmittel 38 des Bedienersensors 24 ist einstückig mit dem Messmittel 38 des Objektsensors 20 ausgebildet. Der Messaufnehmer 48 ist als eine Elektrode ausgebildet. Ferner ist der Messaufnehmer 48 in dem Handgriff 46 des Handmessgeräts 10 angeordnet. Das Messmittel 38 ist kapazitiv über den Messaufnehmer 48 mit dem Bediener 28 gekoppelt. Der Bedienersensors 24 misst die Bedienerkenngröße 30 kapazitiv.

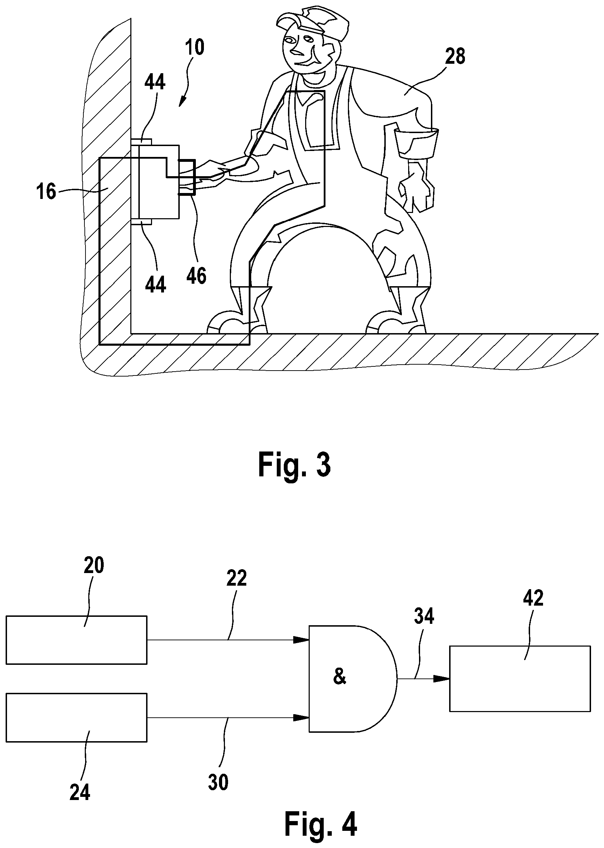

Die Figuren 2 und 3 zeigen, dass die Messaufnehmer 40, 48 des Objektsensors 20 und des Bedienersensors 24 in Reihe geschaltet sind. Ein Tor der Messaufnehmer 40, 48 ist jeweils mit einem der Eingänge des Messmittels 38 verbunden. Die anderen Tore der Messaufnehmer 40, 48 sind über das Messobjekt 16 und den Bediener 28 kapazitiv miteinander gekoppelt. Die Reihenschaltung ist geschlossen, wenn der Bediener 28 den Handgriff 46 gegriffen hat und wenn das Handmessgerät 10, wie vorgesehen, an dem Messobjekt 16 angelegt ist. Der Bediener 28 ist über seine Füße oder einem anderen Körperteil mit dem Messobjekt 16 gekoppelt.

Die Schutzschaltung 18 weist eine Auswerteeinheit 32 auf, die teilweise einstückig mit der Recheneinheit ausgebildet ist. Die Auswerteeinheit 32 umfasst eine Rechenroutine. Die Rechenroutine ist auf einem Prozessor der Recheneinheit ausgeführt. Ferner umfasst die Auswerteeinheit 32 einen Eingang für ein Signal, das die Objektkenngröße 22 und die Bedienerkenngröße 30 aufweist. Des Weiteren umfasst die Auswerteeinheit 32 einen Ausgang für eine Steuerkenngröße 34. Die Auswerteeinheit 32 gibt während eines Betriebs, von der Objektkenngröße 22 und der Bedienerkenngröße 30 abhängig, die Steuerkenngröße 34 aus. Die Steuerkenngröße 34 ist ein Eingangssignal der Ortungselektronik 42. Wenn die Reihenschaltung geöffnet ist unterbricht die Schutzschaltung 18 über die Ortungselektronik 42 eine Aussendung des breitbandigen Funksignals 36. Somit bildet die Reihenschaltung eine UND-Verknüpfung der Objektkenngröße 22 und der Bedienerkenngröße 30 (Figur 4). Dadurch ist gewährleistet, dass das breitbandige Funksignal 36 nur in das Messobjekt hinein und nur wenn es zum Messen benötig ist, gesendet wird.

Der zweite Bedienersensor 26 erfasst während eine Betriebs eine Beschleunigung des Handmessgeräts 10. Die gemessene Beschleunigung wird ausgewertet, das heißt gewichtet, gefiltert und in eine Richtung gerichtet, in die das Handmessgerät 10 bei einer Messung bewegt wird. Wenn die ausgewertete Beschleunigung ein Schwellwert überschreitet, geht die Auswerteeinheit 32 von einer durch den Bediener verursachten Messbewegung aus und schaltet über die Ortungselektronik 42 das breitbandige Funksignal 36 ein. Eine UND-Verknüpfung zwischen einer Bedienerkenngröße des zweiten Bedienersensors 26 und der Objektkenngröße 22 erfolgt dabei durch die Auswerteeinheit 32.

**Patentansprüche**

1. Handmessgerät mit zumindest einem Ortungssensor (12), der dazu vorgesehen ist, in zumindest einem Betriebszustand ein breitbandiges Funksignal (36) auszusenden und zumindest einen Gegenstand (14) in einem Messobjekt (16) zu orten, und mit einer Schutzschaltung (18), die zumindest einen Objektsensor (20) aufweist, der dazu vorgesehen ist, zumindest eine Objektkenngröße (22) zu erfassen, die zumindest von einer Ausrichtung des Ortungssensors (12) auf das Messobjekt (16) abhängig ist, wobei aus der Objektkenngröße darauf schließbar ist, ob der Ortungssensor auf das Messobjekt ausgerichtet ist, wobei die Schutzschaltung (18) zumindest einen Bedienersensor (24, 26) aufweist, der dazu vorgesehen ist, zumindest eine von einem Bediener (28) abhängige Bedienerkenngröße (30) zu erfassen, wobei aus der Bedienerkenngröße darauf schließbar ist, ob der Bediener das Handmessgerät greift, beschleunigt, an ein Messobjekt ansetzt und/oder bewegt, **dadurch gekennzeichnet, dass** die Schutzschaltung (18) zumindest eine Auswerteeinheit (32) aufweist, die in zumindest einem Betriebszustand eine zumindest von der Objektkenngröße (22) und der Bedienerkenngröße (30) abhängige Steuerkenngröße (34) ausgibt, die dazu dient, eine Leistung des ausgesendeten Funksignals des Ortungssensors zu beeinflussen, insbesondere das Funksignal abzuschalten.

2. Handmessgerät nach Anspruch 1, **dadurch gekennzeichnet, dass** der Objektsensor (20) dazu vorgesehen ist, die Objektkenngröße (22) von einem Abstand des Ortungssensors (12) zu dem Messobjekt (16) abhängig zu ermitteln.

3. Handmessgerät nach einem der vorhergehenden Ansprüche, **dadurch gekennzeichnet, dass** der Ortungssensor (12) und der Objektsensor (20) zumindest teilweise einstückig ausgebildet sind.

4. Handmessgerät nach einem der vorhergehenden Ansprüche, **dadurch gekennzeichnet, dass** der Objektsensor (20) und/oder der Bedienersensor (24) dazu vorgesehen sind, kapazitiv zu messen.

5. Handmessgerät nach einem der vorhergehenden Ansprüche, **dadurch gekennzeichnet, dass** der Objektsensor (20) und der Bedienersensor (24) ein zumindest teilweise einstückig ausgebildetes Messmittel (38) aufweisen.

6. Handmessgerät nach einem der vorhergehenden Ansprüche, **dadurch gekennzeichnet, dass** der Objektsensor (20) und der Bedienersensor (24) zumindest teilweise in Reihe geschaltet sind.

7. Handmessgerät nach einem der vorhergehenden Ansprüche, **dadurch gekennzeichnet, dass** der Bedienersensor (26) dazu vorgesehen ist, zumindest eine Beschleunigung zu erfassen.

8. Handmessgerät nach einem der vorhergehenden Ansprüche, **dadurch gekennzeichnet, dass** der Bedienersensor (26) dazu vorgesehen ist, zumindest eine Geschwindigkeit, insbesondere eine Drehgeschwindigkeit zu erfassen.

**Claims**

1. Handheld measuring device having at least one locating sensor (12), which is intended, in at least one operating state, to transmit a wideband radio signal (36) and to locate at least one item (14) in a measurement object (16), and having a protective circuit (18), which has at least one object sensor (20) which is intended to record at least one object parameter (22) which is dependent at least on an orientation of the locating sensor (12) with respect to the measurement object (16), wherein the object parameter can be used to infer whether the locating sensor is oriented with respect to the measurement object, wherein the protective circuit (18) has at least one operator sensor (24, 26) which is intended to record at least one operator parameter (30) which is dependent on an operator (28), wherein the operator parameter can be used to infer whether the operator grips the handheld measuring device, accelerates it, positions it on a measurement object and/or moves it, **characterized in that** the protective circuit (18) has at least one evaluation unit (32) which, in at least one operating state, outputs a control parameter (34) which is dependent at least on the object parameter (22) and the operator parameter (30) and which is used to influence a power of the transmitted radio signal of the locating sensor, in particular to switch off the radio signal.

2. Handheld measuring device according to Claim 1, **characterized in that** the object sensor (20) is intended to determine the object parameter (22) on the basis of a distance between the locating sensor (12) and the measurement object (16).

3. Handheld measuring device according to either of the preceding claims, **characterized in that** the locating sensor (12) and the object sensor (20) are at least partially integral.

4. Handheld measuring device according to one of the preceding claims, **characterized in that** the object sensor (20) and/or the operator sensor (24) is/are intended to measure capacitively.

5. Handheld measuring device according to one of the preceding claims, **characterized in that** the object sensor (20) and the operator sensor (24) have an at least partially integral measuring means (38).

6. Handheld measuring device according to one of the preceding claims, **characterized in that** the object sensor (20) and the operator sensor (24) are at least partially connected in series.

7. Handheld measuring device according to one of the preceding claims, **characterized in that** the operator sensor (26) is intended to detect at least one acceleration.

8. Handheld measuring device according to one of the preceding claims, **characterized in that** the operator sensor (26) is intended to detect at least one speed, in particular a rotational speed.

**Revendications**

1. Appareil de mesure portatif comprenant au moins un détecteur de localisation (12), lequel est conçu pour, dans au moins un état opérationnel, émettre un signal radioélectrique à large bande (36) et localiser au moins un objet (14) dans un objet mesuré (16), et comprenant un circuit de protection (18) qui possède au moins un détecteur d'objet (20), lequel est conçu pour détecter au moins une grandeur caractéristique d'objet (22) qui dépend au moins d'une orientation du détecteur de localisation (12) sur l'objet mesuré (16), la grandeur caractéristique d'objet permettant de déduire si le détecteur de localisation est orienté sur l'objet mesuré, le circuit de protection (18) possédant au moins un détecteur d'opérateur (24, 26), lequel est conçu pour détecter au moins une grandeur caractéristique d'opérateur (30) qui dépend d'un opérateur (28), la grandeur caractéristique d'opérateur permettant de déduire si l'opérateur saisit l'appareil de mesure portatif, l'accélère, l'applique contre un objet mesuré et/ou le déplace, **caractérisé en ce que** le circuit de protection (18) possède au moins une unité d'interprétation (32) qui, dans au moins un état opérationnel, délivre une grandeur caractéristique de commande (34) qui dépend au moins de la grandeur caractéristique d'objet (22) et de la grandeur caractéristique d'opérateur (30) et qui sert à influencer une puissance du signal radioélectrique émis du détecteur de localisation, notamment à déconnecter le signal radioélectrique.

2. Appareil de mesure portatif selon la revendication 1, **caractérisé en ce que** le détecteur d'objet (20) est conçu pour déterminer la grandeur caractéristique d'objet (22) en fonction d'une distance entre le détecteur de localisation (12) et l'objet mesuré (16).

3. Appareil de mesure portatif selon l'une des revendications précédentes, **caractérisé en ce que** le détecteur de localisation (12) et le détecteur d'objet (20) sont au moins partiellement réalisés d'un seul tenant.

4. Appareil de mesure portatif selon l'une des revendications précédentes, **caractérisé en ce que** le détecteur d'objet (20) et/ou le détecteur d'opérateur (24) sont conçus pour mesurer de manière capacitive.

5. Appareil de mesure portatif selon l'une des revendications précédentes, **caractérisé en ce que** le détecteur d'objet (20) et le détecteur d'opérateur (24) possèdent un moyen de mesure (38) configuré au moins partiellement d'un seul tenant.

6. Appareil de mesure portatif selon l'une des revendications précédentes, **caractérisé en ce que** le détecteur d'objet (20) et le détecteur d'opérateur (24) sont au moins partiellement branchés en série.

7. Appareil de mesure portatif selon l'une des revendications précédentes, **caractérisé en ce que** le détecteur d'opérateur (26) est conçu pour détecter au moins une accélération.

8. Appareil de mesure portatif selon l'une des revendications précédentes, **caractérisé en ce que** le détecteur d'opérateur (26) est conçu pour détecter au moins une vitesse, notamment une vitesse de rotation.

**Fig. 1**

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006044947 A2
- EP 2350701 A1
- WO 200511663 A1